# EUROPEAN PATENT SPECIFICATION

(11) **EP 2 674 357 B1**
(45) Date of publication and mention of the grant of the patent: **12.12.2018**
(21) Application number: 13171283.8
(22) Date of filing: 10.06.2013
(51) Int. Cl.: B64C 11/06, F16C 19/36

(54) **Tapered roller bearing element and propeller blade retention assembly**
Konisches Rolllagerelement und Propellerblatt-Haltevorrichtung
Elément de roulement à rouleaux coniques et dispositif de montage de pale d'hélice

(30) Priority: 15.06.2012 US 201213524672
(43) Date of publication of application: 18.12.2013
(73) Proprietor: Hamilton Sundstrand Corporation, Windsor Locks, CT 06096-1010 (US)
(72) Inventor: Carvalho, Paul A., Hadley, MA Massachusetts 01035 (US); Soule, Matthew C., Granby, CT Connecticut 06035 (US)
(74) Representative: Dehns

(56) References cited:
- GB-A- 1 374 098
- US-A- 5 118 256
- US-B2- 7 422 419
- US-B2- 7 845 910

## Description

### BACKGROUND

The present invention relates to a propeller blade system, and more particularly, to a tapered roller bearing element therefor.

Aircraft propeller blade systems include propeller blades which have root portions that extend through a hub arm of a blade hub assembly. Each propeller blade is secured to and rotatable relative to the hub arm via a retention system. Typically, the retention system includes a multitude of bearing assemblies which permit the rotation of the blade within the hub arm to permit blade pitch change. A propeller retention system may include one or more tapered roller bearings for structural capacity and ease of assembly in the case of a preloaded retention as explained in U.S. patent 7,422,419.

Some traditional tapered roller bearing elements have a relatively small radius on one or both ends where contact between the bearing element and the adjacent components abruptly ends. During the rotation of the blade during pitch change, the loading on the bearing element combined with the distinct ends of the bearing element causes a stress concentration at one or both ends of the bearing element. The prior art has dealt with these stress concentrations by crowning the bearing element, meaning that instead of a linear taper, the bearing element has a convex contact surface. Under loading, this surface is elastically deformed slightly such that the contact gradually discontinues along the bearing element. Unfortunately, this approach shortens the effective length of the bearing element as the bearing element extends past the point at which contact with the adjacent components is terminated a significant distance due to the gradual curvature of the contact surface.

US 7,845,910 B2 discloses a propeller blade retention assembly in accordance with the preamble of claim 1, and a method in accordance with the preamble of claim 10.

### SUMMARY

According to the present invention, there is provided a propeller blade retention assembly as set forth in claim 1 and a method as set forth in claim 10.

### BRIEF DESCRIPTION OF THE DRAWINGS

FIG. 1A is a perspective view of a propeller system.
FIG. 1B is a perspective view of a propeller blade retention assembly.
FIG. 2 is a partial cross-section view of the propeller blade retention assembly.
FIG. 3 is a sectional view of the propeller blade retention assembly.
FIG. 4A is a perspective view of a tapered roller bearing cartridge assembly including a tapered roller bearing element.
FIG. 4B is a cross-section view of the tapered roller bearing element having a base cone and a relief cone.
FIG. 4C is an enlarged view of the tapered roller bearing element showing a drop off.
FIG. 4D is a cross-section view of an alternative embodiment having relief cones at both the top end and the bottom end.
FIG. 5 is a flow chart which illustrates a method of assembly of the propeller blade retention assembly.
FIGS. 6A-6F are a perspective views illustrating steps of the assembly method of FIG. 5.
FIG. 7 is a partial phantom perspective view of the propeller blade retention assembly in an assembled condition.

### DETAILED DESCRIPTION

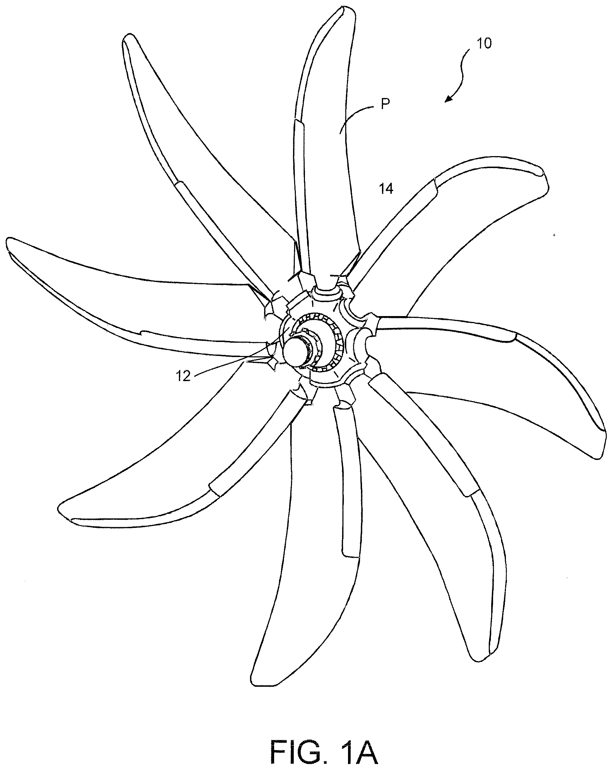

FIG. 1A illustrates a general perspective view of propeller system 10. The propeller system 10 includes hub assembly 12 which supports a plurality of preloaded propeller blade retention assemblies 14 each of which retains a propeller blade P. It should be understood that although propeller blade retention assemblies 14 typical of a turboprop aircraft are illustrated in FIG. 1A, various rigid prop/rotor blade systems including tilt rotor and tilt wing systems which require a preloaded and non-preloaded retentions will benefit from the present invention.

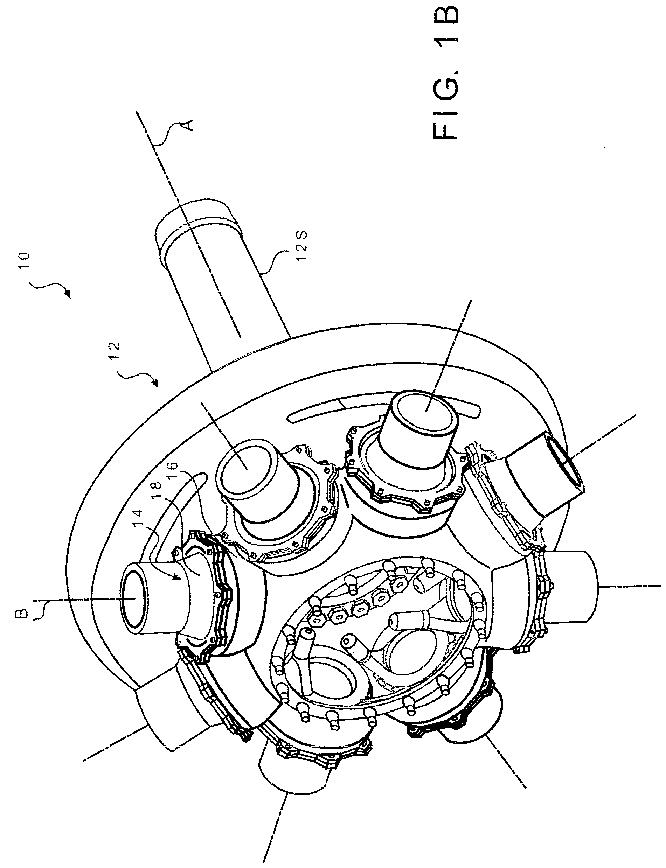

As shown in FIG. 1B, the hub assembly 12 includes a multiple of hub arms 16. Each hub arm 16 is the primary structural support for one propeller blade retention assembly 14. The plurality of hub arms 16 may be formed integrally into a single, one-piece hub which, in addition to providing a mounting location for propeller blades P, may also house the propeller pitch control system. It should be understood that various hub constructions will be usable with the present invention.

Hub assembly 12 is mounted to propeller drive shaft 12S which extends transversely therefrom such that propeller system 10 may be driven about an axis of rotation A. Each propeller blade retention assembly 14 defines blade axis B transverse to axis of rotation A.

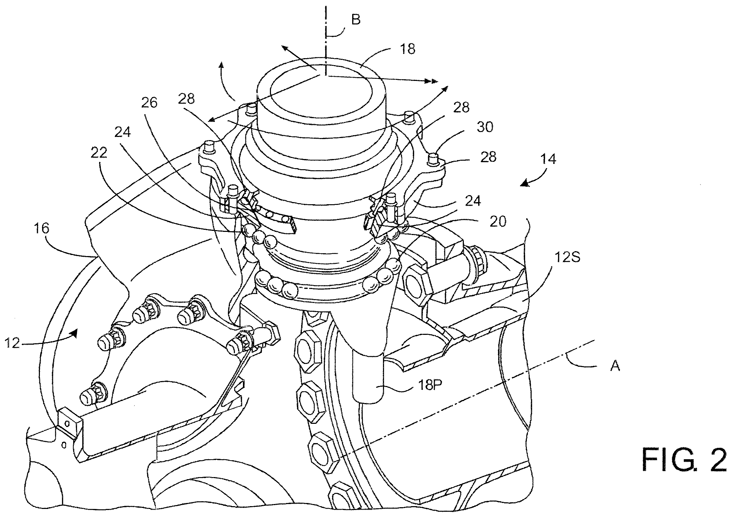

As shown in FIG. 2, each propeller blade retention assembly 14 includes propeller blade root 18, inner retention ball bearing set 20, outboard retention ball bearing set 22, floating race 24, tapered roller bearing set 26, and end cap 28. While each propeller blade retention assembly 14 may not be identical, the illustrated embodiment of propeller blade retention assembly 14 is representative of all propeller blade retention assemblies 14 in propeller system 10.

Propeller blade retention assembly 14 applies a preload to propeller blade root 18 generally along blade axis B which increases the moment capacity of the retention for a given pitch diameter, yet permits pitching of propeller blade root 18 about blade axis B in response to a propeller pitch change actuation system which interacts with blade pitch pin 18P. It should be understood that propeller blade root 18 as illustrated may be a section of a complete propeller blade, or a retention portion which receives a removable airfoil portion of a propeller blade.

The components and configuration of propeller system 10 as depicted in FIGS. 1A, 1B, and 2 allow for the pitch of propeller blades P to be changed. More specifically, propeller blades P can be rotated on tapered roller bearing set 26 (shown in FIG. 2) within propeller blade retention assembly 14.

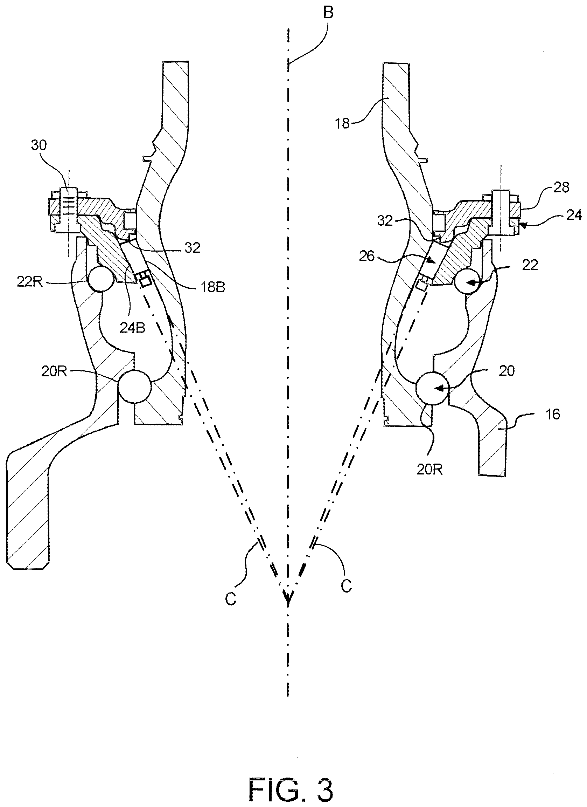

As shown in FIG. 3, propeller blade retention assembly 14 is supported within hub arm 16 by inner retention ball bearing set 20, outboard retention ball bearing set 22, and tapered roller bearing set 26 which extend about a perimeter of the propeller blade root 18. An inner pitch diameter is defined by inner retention ball bearing set 20 which runs in inboard race 20R defined between hub arm 16 and propeller blade root 18. An outer pitch diameter is defined by outboard retention ball bearing set 22 which runs in outboard race 22R defined between hub arm 16 and floating race 24.

Tapered roller bearing set 26 runs between floating race 24 and propeller blade root 18 as maintained by end cap 28 which is fastened to floating race 24 through a plurality of threaded fasteners 30 (also illustrated in FIG. 2) which can be, for example, bolts. Threaded fastener 30 is located generally parallel to blade axis B to maintain end cap 28 and floating race 24 in facial engagement such that end cap nose 32 contacts tapered roller bearing set 26. End cap 28 is in facial engagement with the floating race 24 and is not threaded thereto, such that stress concentrations are minimized and threaded fasteners 30 provide multiple redundant load paths. End cap nose 32 positions tapered roller bearing set 26 between end cap 28 and floating race 24 to impart and maintain the preload condition.

Tapered roller bearing elements of tapered roller bearing set 26 define base cone angle C which intersects blade axis B. Tapered roller bearing set 26 runs between floating race bearing surface 24B of floating race 24 and propeller blade root bearing surface 18B of propeller blade root 18. Floating race bearing surface 24B and propeller blade root bearing surface 18B are also defined along a base cone angle such that floating race bearing surface 24B is an inner surface which faces toward blade axis B and propeller blade root bearing surface 18B is an outer surface which faces away from blade axis B. In other words, a frustoconical interface is formed about blade axis B to receive tapered roller bearing set 26.

The preload condition is generated by tapered roller bearing set 26 which pushes propeller blade root 18 outboard along blade axis B and floating race 24 inboard along blade axis B. Tapered roller bearing set 26 provides potentially lower rolling element friction than outboard retention ball bearing set 22 in which pitch change results in rotation at inner retention ball bearing set 20 and tapered roller bearing set 26 during pitch change. Outboard retention ball bearing set 22 has a potentially higher friction and need not rotate. Outboard retention ball bearing set 22 also provides a softer preloaded joint allowing for wear without loss of preload. The preload provides relatively stiff blade retention, yet permits pitching of propeller blade root 18 about blade axis B by allowing rotation at outboard retention ball bearing set 22.

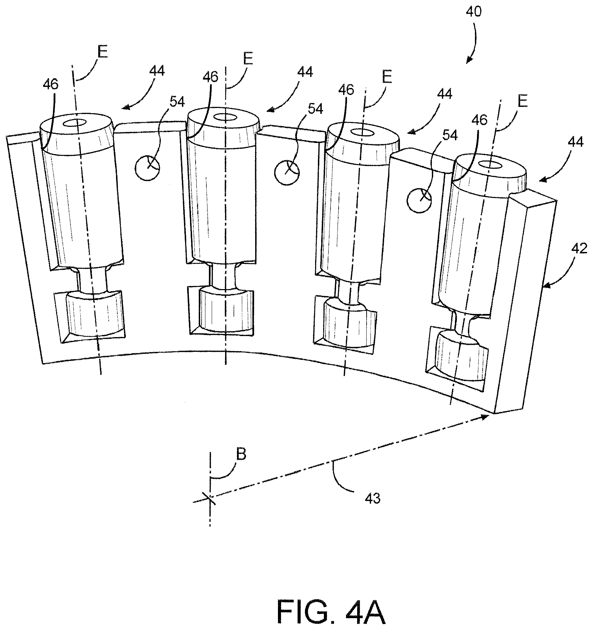

The components and configuration of propeller blade retention assembly 14 as shown in FIG. 3 allow for tapered roller bearing set 26 to reduce the friction that would otherwise exist between propeller blade root 18 and floating race 24 when the pitch of propeller blades P are changed. In addition, base cone angle C is created which allows for tapered roller bearing elements 44 (shown in FIG. 4A) to have a generally tapered shape.

Depicted in FIG. 3 is one embodiment of the present invention, to which there are alternative embodiments. For example, various seal arrangements (not shown) may be employed in accordance with the present invention. In such an embodiment, one or more seals may be located between propeller blade root 18 and end cap 28; end cap 28 and floating race 24; and/or floating race 24 and hub arm 16.

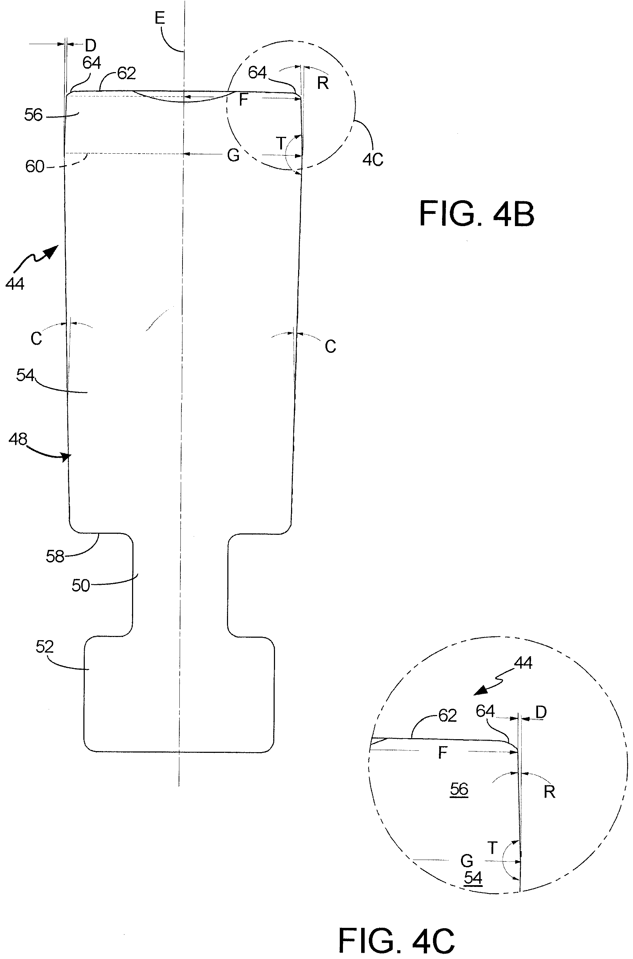

In FIG. 4A, a perspective view of tapered roller bearing cartridge assembly 40 including tapered roller bearing element 44 is shown. In FIG. 4B, a cross-section view of tapered roller bearing element 44 is shown. In FIG. 4C, an enlarged view of tapered roller bearing element is shown. FIGS. 4A-4C will now be discussed simultaneously.

Referring to FIG. 4A, tapered roller bearing set 26 includes a plurality of tapered roller bearing cartridge assemblies 40 (of which one is shown in FIG. 4A), each having a retention cartridge 42 and at least one tapered roller bearing element 44 (of which four are shown in FIG. 4A). Retention cartridge 42 defines radius 43 for receipt between propeller blade root 18 and floating race 24 about blade axis B. Retention cartridge 42 retains each of the plurality of tapered roller bearing elements 44 within a roller bearing element slot 46 along tapered roller bearing element axis E.

In the illustrated embodiment, tapered roller bearing set 26 has four tapered roller bearing elements 44 per retention cartridge 42 with a total of seven cartridges per propeller blade P. It should be understood that any number of cartridges may be utilized with the least number of cartridges possible being two, however, assembly considerations may dictate the number of cartridges based on the size of the initial gap between the plurality of tapered roller bearing cartridge assemblies 40 relative to the desired preload.

Referring to FIGS. 4B-4C, tapered roller bearing element 44 comprises bearing element main body section 48 that is connected to neck 50 that is also connected to head 52. Neck 50 and head 52 are designed to interface with retention cartridge 42 to allow tapered roller bearing element 44 to rotate within roller bearing element slot 46. As shown in FIG. 3, bearing element main body section 48 is the portion of tapered roller bearing element 44 that performs the load bearing by being in facial engagement with propeller blade root 18 and floating race 24.

Generally, bearing element main body section 48 comprises base cone 54 and relief cone 56. More specifically, base cone 54 has a frusto-conical shape that tapers outwardly (with respect to tapered roller bearing element axis E) from bottom end 58 (which is connected to neck 50) to apex ring 60. Relief cone 56 is adjacent to base cone 54 and has a frusto-conical shape that tapers inwardly (with respect to base cone 54) from apex ring 60 to top end 62 along tapered roller bearing element axis E.

Generally, base cone 54 extends along base cone angle C, and relief cone 56 extends along relief cone angle R. Both base cone angle C and relief cone angle R are measured with respect to tapered roller bearing element axis E. Preferably, base cone angle C is between one half (0.5) degrees and five (5) degrees. More preferably, base cone angle C is between one degree and two degrees. In the illustrated embodiment, base cone angle C is 1.26 degrees. Preferably, relief cone angle R is between one degree and two degrees. In the illustrated embodiment, relief cone angle R is 1.74 degrees. In addition, transition angle T exists between base cone 54 and relief cone 56 at apex ring 60. The transition angle T is at least 170 degrees and no more than 179 degrees. In the illustrated embodiment, transition angle T is 177 degrees.

Relief cone 56 is preferably not more than twenty percent of the total length of bearing element main body section 48. In addition, relief cone 56 is preferably at least ten percent of the total length of bearing element main body section 48. In the illustrated embodiment, bearing element main body section 48 has a length of 17.8 mm (0.70 inches) and relief cone 56 has a length of 2.54 mm (0.10 inches). Therefore, relief cone 56 is 14.3 percent of the length of bearing element main body section 48.

Apex ring 60 occurs at the junction of base cone 54 and relief cone 56. Apex ring 60 is the outermost edge of bearing element main body section 48 and has apex ring radius G. Towards top end 60 of relief cone 56, prior to edge radius 64, there is top end radius F. The difference between top end radius F and apex ring radius G is drop off D. Drop off D is preferably between 0.050 mm (0.002 inches) and 0.26 mm (0.010 inches). In the illustrated embodiment, drop off D is 0.10 mm (0.004 inches).

Strictly from the perspective of geometry, apex ring 60 should be the topmost contact point between bearing element main body section 48 and propeller blade root 18/floating race 24. But when tapered roller bearing element 44 is loaded or preloaded, tapered roller bearing element 44 compresses slightly. This elastically deforms tapered roller bearing element 44 such that apex ring 60 is no longer the outermost portion of bearing element main body section 48. Instead, contact ceases between bearing element main body section 48 and propeller blade root 18/floating race 24 at some point along relief cone 56. This creates a gradual separation of bearing element main body section 48 from propeller blade root 18/floating race 24. But drop off D is sufficiently large as to prevent the end of contact from occurring at top end 62 (or on edge radius 64) because that would create a sharp break in contact that would lead to stress concentrations in bearing element main body section 48, propeller blade root 18, and/or floating race 24.

The configuration of tapered roller bearing element 44 as shown in FIGS. 4A-4C allows for tapered roller bearing element 44 to be rotatably attached to retention cartridge 42. In addition, the gradual separation provided by relief cone substantially prevents stress concentrations from existing in bearing element main body section 48, propeller blade root 18, or floating race 24. This effect occurs with minimal extra length of bearing element main body section 48.

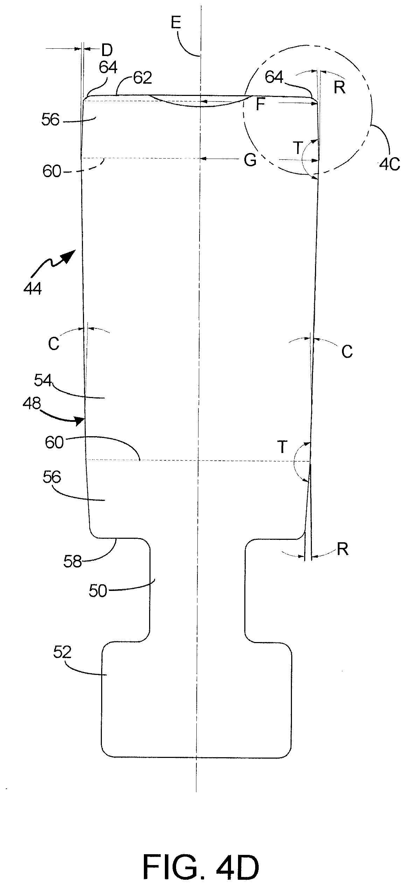

Depicted in FIGS. 4A-4C is one embodiment of the present invention, to which there are alternative embodiments. For example, relief cone 56 can be positioned at bottom end 58. For another example shown in FIG. 4D, and there are two relief cones 56, with one at bottom end 58 and another at top end 62.

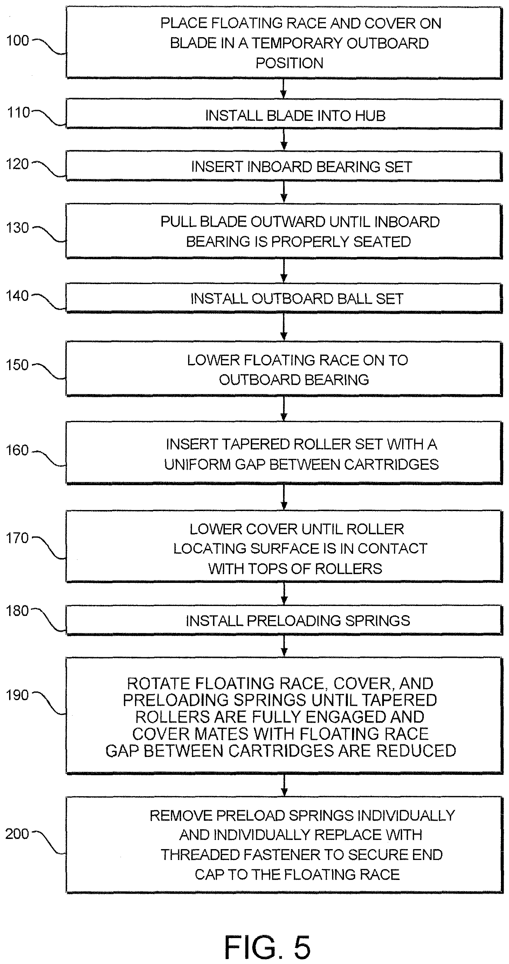

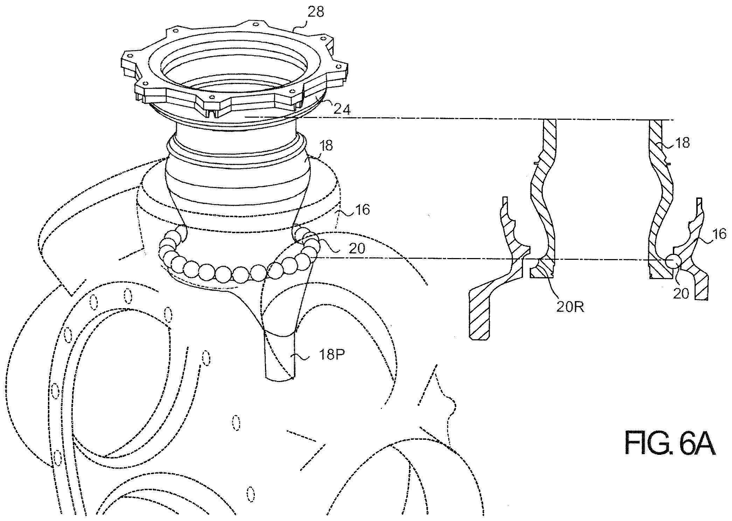

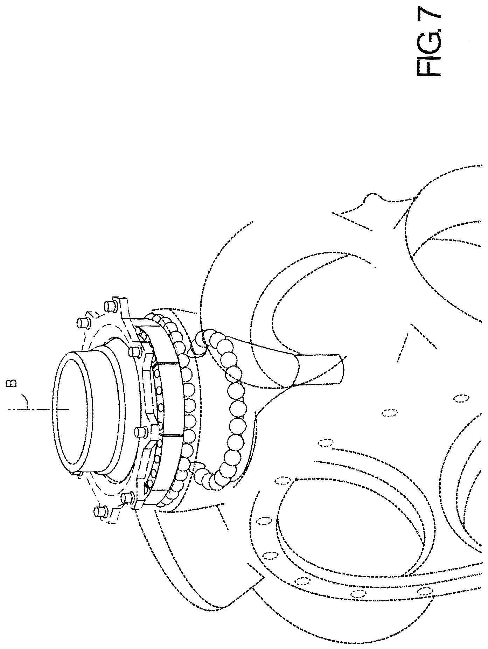

In FIG. 5, a flow chart which illustrates a method of assembly of propeller blade retention assembly 14 is shown. Such a method also discloses how the preload condition is produced in an uncomplicated manner which facilitates routine maintenance and repair in a field environment. The steps discussed in FIG. 5 are illustrated in FIGS. 6A-6F, with the final result being shown in FIG. 7.

FIG. 6A illustrates steps 100, 110, 120, and 130. In step 100, floating race 24 and end cap 28 are located over the propeller blade root 18 in a temporary outboard position away from hub arm 16. In step 110, propeller blade root 18 is installed into hub arm 16. In step 120, inboard retaining ball bearing set 20 is located within inboard race 20R between propeller blade root 18 and hub arm 16. In step 130, propeller blade root 18 is partially retracted outboard relative hub arm 16 such that inboard retaining ball bearing set 20 seated within inboard race 20R.

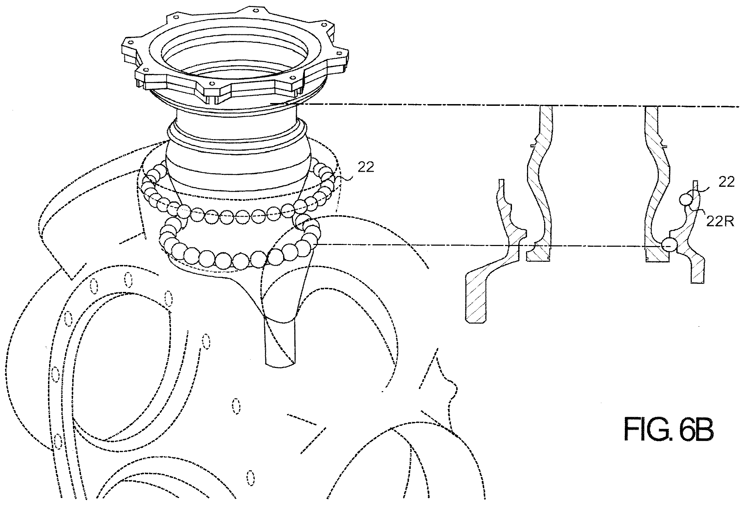

As shown in FIG. 6B, in step 140 outboard retention ball bearing set 22 is located within a portion of outer race 22R defined by hub arm 16. Outboard retention ball bearing set 22 permits floating race 24 to be rotated for assembly purposes otherwise propeller blade root 18 would have to be rotated which may not be possible as the airfoils of adjacent propeller blades P may touch.

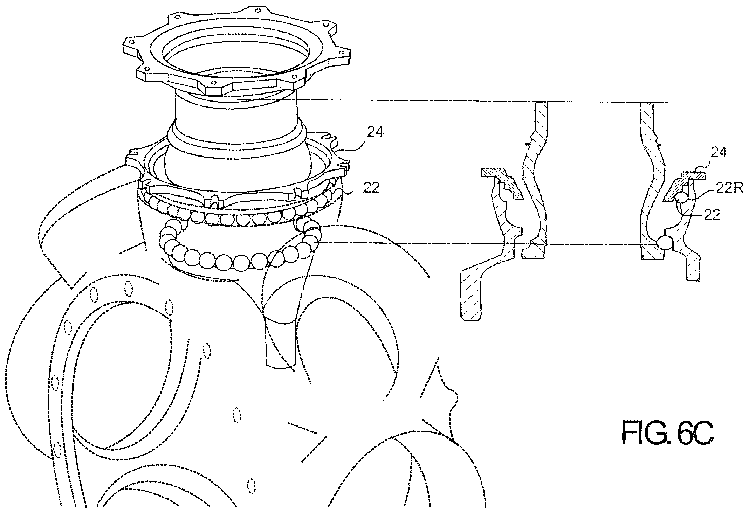

As shown in FIG. 6C, in step 150 floating race 24 is lowered onto outboard retaining bearing set 22 to complete the outer race 22R formed between floating race 24 and hub arm 16.

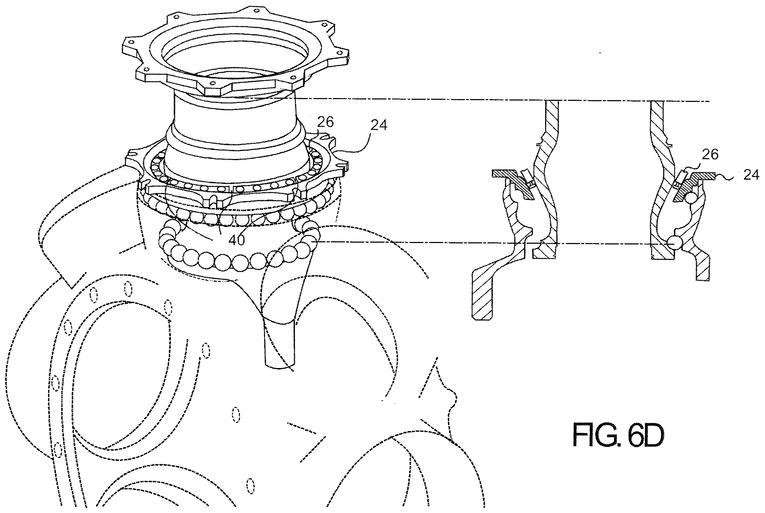

As shown in FIG. 6D, in step 160 tapered roller bearing set 26 is installed between floating race 24 and propeller blade root 18. At this initial position, an equally spaced gap between each of the plurality of tapered roller bearing cartridge assemblies 40 is defined.

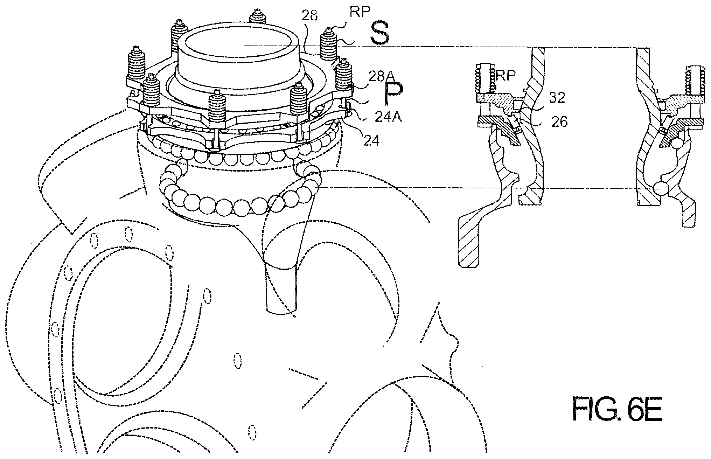

As shown in FIG. 6E, in step 170 end cap 28 is lowered onto the tapered roller bearing set 26 until end cap nose 32 contacts tapered roller bearing set 26. In step 180, preload springs S are mounted on bolts P which are passed through end cap apertures 28A and floating race apertures 24A.

Preload springs S bias end cap 28 toward floating race 24. Nut RP threaded to the preload bolt P selectively retains spring S on preload bolt P. Nut RP is then torqued to create a state of compression on preload spring S. It should be understood that other preload devices and fixtures may alternatively be utilized to apply a preload which biases tapered roller bearing elements 44 toward floating race 24 during installation.

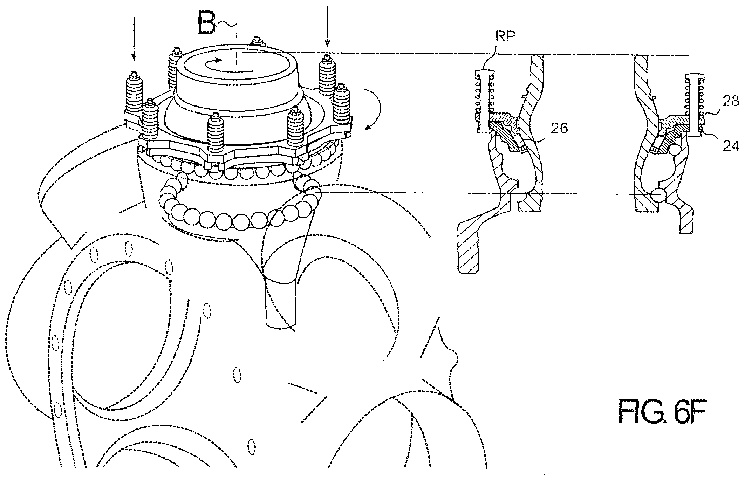

As shown in FIG. 6F, in step 190 floating race 24, end cap 28, and preload springs S are rotated until tapered roller bearing set 26 is fully installed. Tapered roller bearing set 26 is fully seated when end cap 28 mates in facial engagement with floating race 24. During this preload process, the gap between each of the plurality of tapered roller bearing cartridge assemblies 40 closes such that an essentially equal space between tapered roller bearing elements 44 is provided about the circumference of tapered roller bearing set 26. That is, the plurality of tapered roller bearing cartridge assemblies 40 facilitate installation and retention of tapered roller bearing elements 44 within the preloaded propeller blade retention assembly 14 as the plurality of tapered roller bearing cartridge assemblies 40 move together during the process of preloading the retention.

The preload condition is initially established by preload springs S which apply a load on top end 62 of tapered roller bearing elements 44 as floating race 24 is rotated, which allows tapered roller bearing set 26 to progressively push propeller blade root 18 outboard and floating race 24 inboard along blade axis B generating the preloaded condition. That is, springs S maintain an axial roller end load as tapered roller bearing elements 44 progressively engage the conical space between floating race 24 and propeller blade root 18. This axial end load may alternatively or additionally be applied with tooling designed to interface with outer race 22R. The axial force is applied to top ends 62 of tapered roller bearing elements 44. The axial force slides across top ends 62 of tapered roller bearing elements 44 during the preload process as a result of the hardware geometry. (Although, propeller blade retention assembly 14 can be configured to apply a load on bottom end 58. In such an embodiment, relief cone 56 would exist at bottom end 58.)

The movement along the axis E (shown in FIG. 4A) of each tapered roller bearing element 44 is possible due to a combination of a low rolling coefficient of friction and a slightly tipped tapered roller bearing element 44 that moves inward in a helical path. Floating race 24 is important to the application of the preload as propeller blade P would not otherwise be free to rotate when engaged with the propeller pitch actuation system.

Once this process is completed, tapered roller bearing set 26 is retained in place due to a relative high static coefficient of friction along blade axis B. But propeller blade root 18 is still free to rotate about blade axis B in response to pitch change inputs. The plurality of tapered roller bearing cartridge assemblies 40 move closer together during the process of preloading because their final installed diameter, relative to the pitch change axis, is smaller in their final position than in their initial position.

As shown in FIG. 7, in step 200 nut RP is removed from bolt P and each preload spring S and bolt P are removed and replaced by the threaded fastener 30 into each end cap apertures 28A and floating race aperture 24A. It should be understood that each nut RP, bolt P, and preload spring S may be removed individually prior to installation of each threaded fastener 30. Tapered roller bearing set 26 is alternatively retained in place due to a relative high static coefficient of friction along blade axis B.

To disassemble blade assembly 14 from hub arm 16, threaded fasteners 30 are removed. The axial load on tapered roller bearing set 26 is then removed by rotation of floating race 24 such that the normal forces on tapered roller bearing set 26 from the preload and tapered roller bearing element base cone angle C result in a self-generated axial load on tapered roller bearing set 26 which pushes tapered roller bearing set 26 out of engagement.

The steps of the method of assembly of propeller blade retention assembly 14 allow for tapered roller bearing set 26 to be preloaded. This prevents separation of bearing element main body sections 48 from propeller blade root 18/floating race 24 due to moment loading during operation. This preload also compresses bearing element main body sections 48, changing the upper end of contact between bearing element main body sections 48 and propeller blade root 18/floating race 24.

It should be recognized that the present invention provides numerous benefits and advantages. For example, the life of tapered roller bearing elements 44, propeller blade root 18, and floating race 24 are all increased due to the substantial prevention of a stress concentration at the cessation of contact with bearing element main body sections 48. For another example, the maximum effective length of bearing element main body sections 48 is utilized without wasting length, which conserves both weight and space.

While the invention has been described with reference to an exemplary embodiment(s), it will be understood by those skilled in the art that various changes may be made without departing from the scope of the invention. Therefore, it is intended that the invention not be limited to the particular embodiment(s) disclosed, but that the invention will include all embodiments falling within the scope of the appended claims.

## Claims

1. A propeller blade retention assembly (14) comprising:
a propeller blade root (18) which defines a blade axis;
a hub arm (16) which at least partially surrounds the propeller blade root (18);
a floating race (24) mounted generally between the hub arm (16) and the propeller blade root (18), the floating race (24) defining a floating race bearing surface (24B) and the propeller blade root (18) defines a propeller blade root bearing surface (18B), the floating race bearing surface (24B) and the propeller blade root bearing surface (18B) define a base cone angle (C) which intersects the blade axis;
a tapered roller bearing set (26) including a plurality of tapered roller bearing elements (44), each tapered roller bearing element including a bearing element main body section (48) having a base cone (54) that extends along the base cone angle (C); and
an end cap (28) mounted to the floating race (24) to maintain preload in the propeller blade root (18) relative to the hub arm (16);
**characterised in that** the base cone (54) tapers outwardly to an apex ring (60), the base cone (54) being adjacent to a relief cone (56) having a frusto-conical shape that tapers inwardly from the apex ring (60), wherein a transition angle (T) between the base cone (54) and the relief cone (56) at the apex ring (60) is at least 170 degrees and is no more than 179 degrees.

2. The propeller blade retention assembly of claim 1, wherein each tapered roller bearing element (44) further comprises:
a bearing element main body section (48) comprising the base cone (54) and the relief cone (56);
a length of the relief cone (56) that is not more than 15% of a length of the bearing element main body section (48).

3. The propeller blade retention assembly of claim 2, wherein the length of the relief cone (56) of each tapered roller bearing element (44) is at least 10% of the bearing length.

4. The propeller blade retention assembly of any preceding claim, wherein the base cone angle (C) of each tapered roller bearing element (44) is between one half degree and five degrees.

5. The propeller blade retention assembly of any preceding claim, wherein the base cone angle (C) of each tapered roller bearing element (44) is is between one and two degrees.

6. The propeller blade retention assembly of any preceding claim, wherein the relief cone (56) of each tapered roller bearing element (44) tapers inwardly at a relief cone angle (R) that is between one and two degrees.

7. The propeller blade retention assembly of any preceding claim, wherein in each tapered roller bearing element (44):
the base cone (54) tapers at the base cone angle (C) between a first end and the apex ring (60) which has an apex ring radius;
the relief cone (56) tapers at a relief cone angle (R) between a second end having a second end radius and the apex ring; and
a drop off (D) that is defined by a difference between the apex ring radius and the second end radius, wherein the drop off (D) is between 0.050 mm and 0.26 mm.

8. The propeller blade retention assembly of any preceding claim, wherein each tapered roller bearing element (44) further comprises:
a neck (50) connected to a or the first end of the base cone (54); and
a head (52) connected to the neck (50).

9. The propeller blade retention assembly of any preceding claim, wherein each tapered roller bearing element (44) further comprisies:
a second relief cone (56) extending from a second apex ring (60) to the first end.

10. A method of assembling a propeller blade retention assembly (14) comprising the steps of:
locating a propeller blade root (18) into a hub arm (16) along a blade axis;
locating a floating race (24) in contact with an outboard retaining ball bearing set (22) within the hub arm (16);
locating a tapered roller bearing set (26) between the floating race (24) and the propeller blade root (18), the tapered roller bearing set (26) including a plurality of tapered roller bearing elements (44), each tapered roller bearing element (44) including a bearing element main body section (48) having a base cone (54) and
locating an end cap (28) into facial engagement with the floating race (24), the end cap (28) contacting the tapered roller bearing set (26) to maintain preload of the propeller blade root (18) relative to the hub arm (16);
**characterised in that** the base cone (54) tapers outwardly to an apex ring (60), the base cone (54) being adjacent to a relief cone (56) having a frusto-conical shape that tapers inwardly from the apex ring (60), wherein a transition angle (T) between the base cone (54) and the relief cone (56) at the apex ring (60) is at least 170 degrees and is no more than 179 degrees.

11. The method of claim 10, wherein each tapered roller bearing element (44) further comprises:
a neck (50) connected to the base cone (54); and
a head (52) connected to the neck (50).

12. The method of claim 10 or 11, wherein locating the end cap (28) further comprises:
rotating the floating race (24) and the end cap (28) until the end cap (28) contacts the floating race (24) in the facial engagement.

13. The method of any of claims 10 to 12, wherein locating the end cap (28) further comprises:
rotating the floating race (24) and the end cap (28) until the tapered roller bearing set (26) is fully seated between the floating race (24) and the propeller blade root (18).

## Patentansprüche

1. Propellerblatt-Haltevorrichtung (14), umfassend:
einen Propellerblattfuß (18), der eine Blattachse definiert;
einen Nabenarm (16), der zumindest teilweise den Propellerblattfuß (18) umgibt;
einen frei beweglichen Laufring (24), der im Wesentlichen zwischen dem Nabenarm (16) und dem Propellerblattfuß (18) montiert ist, wobei der frei bewegliche Laufring (24) eine frei bewegliche Laufringauflagefläche (24B) definiert und der Propellerblattfuß (18) eine Propellerblattfußauflagefläche (18B) definiert, wobei die frei bewegliche Laufringauflagefläche (24B) und die Propellerblattfußauflagefläche (18B) einen Basiskegelwinkel (C) definieren, der die Blattachse schneidet;
ein konischer Rolllagersatz (26), der eine Vielzahl von konischen Rolllagerelementen (44) beinhaltet, wobei jedes konische Rolllagerelement ein Rolllagerhauptkörperabschnitt (48) mit einem Basiskegel (54) aufweist, der sich entlang des Basiskegelwinkels (C) erstreckt; und
einen Endverschluss (28), der an dem frei beweglichen Laufring (24) montiert ist, um eine Vorspannung in dem Blattpropellerfuß (18) gegenüber dem Nabenarm (16) aufrechtzuerhalten;
**dadurch gekennzeichnet, dass** der Basiskegel (54) sich nach außen zu einem Apexring (60) verjüngt, der Basiskegel (54) sich benachbart zu einem Entlastungskegel (56) befindet, der eine kegelstumpfförmige Form aufweist, die sich nach innen von dem Apexring (60) erstreckt, wobei ein Übertragungswinkel (T) zwischen dem Basiskegel (54) und dem Entlastungskegel (56) an dem Apexring (60) mindestens 170 Grad beträgt und nicht über 179 Grad liegt.

2. Propellerblatt-Haltevorrichtung nach Anspruch 1, wobei jedes konische Rolllagerelement (44) ferner umfasst:
ein Rolllagerhauptkörperabschnitt (48), der den Basiskegel (54) und den Entlastungskegel (56) umfasst;
eine Länge des Entlastungskegels (56), die nicht mehr als 15 % einer Länge des Rolllagerhauptkörperabschnitts (48) entspricht.

3. Propellerblatt-Haltevorrichtung nach Anspruch 2, wobei die Länge des Entlastungskegels (56) jedes konischen Rolllagerelements (44) mindestens 10 % der Länge des Lagers entspricht.

4. Propellerblatt-Haltevorrichtung nach einem der vorstehenden Ansprüche, wobei der Basiskegelwinkel (C) jedes konischen Rolllagerelements (44) zwischen einem halben Grad und fünf Grad liegt.

5. Propellerblatt-Haltevorrichtung nach einem der vorstehenden Ansprüche, wobei der Basiskegelwinkel (C) jedes konischen Rolllagerelements (44) zwischen ein und zwei Grad liegt.

6. Propellerblatt-Haltevorrichtung nach einem der vorstehenden Ansprüche, wobei der Entlastungskegel (56) jedes konischen Rolllagerelements (44) sich nach innen mit einem Entlastungskegelwinkel (R) verjüngt, der zwischen ein und zwei Grad liegt.

7. Propellerblatt-Haltevorrichtung nach einem der vorstehenden Ansprüche, wobei in jedem konischen Rolllagerelement (44):
sich der Basiskegel (54) mit einem Basiskegelwinkel (C) zwischen einem ersten Ende und dem Apexring (60) verjüngt, der einen Apexringradius aufweist;
sich der Entlastungskegel (56) mit einem Entlastungskegelwinkel (R) zwischen einem zweiten Ende, das einen Radius des zweiten Endes aufweist, und dem Apexring verjüngt; und
ein Abfall (D) ist, der durch eine Differenz zwischen dem Apexringradius und dem Radius des zweiten Endes definiert ist, wobei der Abfall (D) zwischen 0,05 mm und 0,26 mm beträgt.

8. Propellerblatt-Haltevorrichtung nach einem der vorstehenden Ansprüche, wobei jedes konische Rolllagerelement (44) ferner umfasst:
einen Hals (50), der mit einem oder dem ersten Ende des Basiskegels (54) verbunden ist; und
einen Kopf (52), der mit dem Hals (50) verbunden ist.

9. Propellerblatt-Haltevorrichtung nach einem der vorstehenden Ansprüche, wobei jedes konische Rolllagerelement (44) ferner umfasst:
einen zweiten Entlastungskegel (56), der sich von einem zweiten Apexring (60) zu dem ersten Ende erstreckt.

10. Verfahren zum Montieren einer Propellerblatt-Haltevorrichtung (14), die folgenden Schritte umfassend:
Anordnen eines Propellerblatts (18) in einen Nabenarm (16) entlang einer Blattachse;
Anordnen eines beweglichen Laufrings (24) in Kontakt mit einem Außenhalterolllagersatz (22) innerhalb des Nabenarms (16);
Anordnen eines konischen Rolllagersatzes (26) zwischen dem frei beweglichen Laufring (24) und dem Propellerblattfuß (18), wobei der konische Rolllagersatz (26) eine Vielzahl von konischen Rolllagerelementen (44) beinhaltet, wobei jedes konische Rolllagerelement (44) einen Rolllagerhauptkörperabschnitt (48) mit einem Basiskegel (54) beinhaltet und
Anordnen eines Endverschlusses (28) in ein flächiges Eingreifen mit dem frei beweglichen Laufring (24), wobei der Endverschluss (28) in Kontakt mit dem konischen Rolllagersatz (26) steht, um eine Vorspannung in dem Blattpropellerfuß (18) gegenüber dem Nabenarm (16) aufrechtzuerhalten;
**dadurch gekennzeichnet, dass** der Basiskegel (54) sich nach außen zu einem Apexring (60) verjüngt, der Basiskegel (54) sich benachbart zu einem Entlastungskegel (56) befindet, der eine kegelstumpfförmige Form aufweist, die sich nach innen von dem Apexring (60) erstreckt, wobei ein Übertragungswinkel (T) zwischen dem Basiskegel (54) und dem Entlastungskegel (56) an dem Apexring (60) mindestens 170 Grad beträgt und nicht über 179 Grad liegt.

11. Verfahren nach Anspruch 10, wobei jedes konische Rolllagerelement (44) ferner umfasst:
einen Hals (50), der mit dem Basiskegel (54) verbunden ist; und
einen Kopf (52), der mit dem Hals (50) verbunden ist.

12. Verfahren nach Anspruch 10 oder 11, wobei das Anordnen des Endverschlusses (28) ferner umfasst:
Rotieren des frei beweglichen Laufrings (24) und des Endverschlusses (28) bis der Endverschluss (28) mit dem frei beweglichen Laufring (24) in flächigem Eingreifen in Kontakt ist.

13. Verfahren nach einem der Ansprüche 10 bis 12, wobei das Anordnen des Endverschlusses (28) ferner umfasst:
Rotieren des frei beweglichen Laufrings (24) und des Endverschlusses (28) bis der konische Rolllagersatz (26) fest zwischen dem frei beweglichen Laufring (24) und dem Propellerblattfuß (18) sitzt.

## Revendications

1. Ensemble de montage de pale d'hélice (14) comprenant :
un pied de pale d'hélice (18) qui définit un axe de pale ;
un bras de moyeu (16) qui entoure au moins partiellement le pied de pale d'hélice (18) ;
une bague flottante (24) montée généralement entre le bras de moyeu (16) et le pied de pale d'hélice (18), la bague flottante (24) définissant une surface de roulement de bague flottante (24B) et le pied de pale d'hélice (18) définit une surface de roulement de pied de pale d'hélice (18B), la surface de roulement de bague flottante (24B) et la surface de roulement de pied de pale d'hélice (18B) définissent un angle de cône de base (C) qui croise l'axe de pale ;
un ensemble de roulement à rouleaux coniques (26) incluant une pluralité d'éléments de roulement à rouleaux coniques (44), chaque élément de roulement à rouleaux coniques incluant une section corps principal d'élément de roulement (48) ayant un cône de base (54) qui s'étend le long de l'angle de cône de base (C) ; et
un embout (28) monté sur la bague flottante (24) pour maintenir la précontrainte dans le pied de pale d'hélice (18) par rapport au bras de moyeu (16) ;
**caractérisé en ce que** le cône de base (54) se rétrécit vers l'extérieur vers un anneau de pointe (60), le cône de base (54) étant adjacent à un cône en relief (56) ayant une forme tronconique qui se rétrécit vers l'intérieur depuis l'anneau de pointe (60), dans lequel un angle de transition (T) entre le cône de base (54) et le cône en relief (56) au niveau de l'anneau de pointe (60) est d'au moins 170 degrés et inférieur ou égal à 179 degrés.

2. Ensemble de montage de pale d'hélice selon la revendication 1, dans lequel chaque élément de roulement à rouleaux coniques (44) comprend en outre :
une section corps principal d'élément de roulement (48) comprenant le cône de base (54) et le cône en relief (56) ;
une longueur du cône en relief (56) qui est inférieure ou égale à 15 % d'une longueur de la section corps principal d'élément de roulement (48).

3. Ensemble de montage de pale d'hélice selon la revendication 2, dans lequel la longueur du cône en relief (56) de chaque élément de roulement à rouleaux coniques (44) représente au moins 10 % de la longueur de roulement.

4. Ensemble de montage de pale d'hélice selon une quelconque revendication précédente, dans lequel l'angle de cône de base (C) de chaque élément de roulement à rouleaux coniques (44) se situe entre un demi degré et cinq degrés.

5. Ensemble de montage de pale d'hélice selon une quelconque revendication précédente, dans lequel l'angle de cône de base (C) de chaque élément de roulement à rouleaux coniques (44) se situe entre un et deux degrés.

6. Ensemble de montage de pale d'hélice selon une quelconque revendication précédente, dans lequel le cône en relief (56) de chaque élément de roulement à rouleaux coniques (44) se rétrécit vers l'intérieur au niveau d'un angle de cône en relief (R) qui se situe entre un et deux degrés.

7. Ensemble de montage de pale d'hélice selon une quelconque revendication précédente, dans lequel dans chaque élément de roulement à rouleaux coniques (44) :
le cône de base (54) se rétrécit au niveau de l'angle de cône de base (C) entre une première extrémité et l'anneau de pointe (60) qui a un rayon d'anneau de pointe ;
le cône en relief (56) se rétrécit au niveau d'un angle de cône en relief (R) entre une seconde extrémité ayant un second rayon d'extrémité et l'anneau de pointe ; et
une dénivellation (D) qui est définie par une différence entre le rayon d'anneau de pointe est le rayon de seconde extrémité, dans lequel la dénivellation (D) se situe entre 0,050 mm et 0,26 mm.

8. Ensemble de montage de pale d'hélice selon une quelconque revendication précédente, dans lequel chaque élément de roulement à rouleaux coniques (44) comprend en outre :
un col (50) lié à une ou la première extrémité du cône de base (54) ; et
une tête (52) liée au col (50).

9. Ensemble de montage de pale d'hélice selon une quelconque revendication précédente, dans lequel chaque élément de roulement à rouleaux coniques (44) comprend en outre :
un second cône en relief (56) s'étendant d'un second anneau de pointe (60) à la première extrémité.

10. Procédé d'assemblage d'un ensemble de montage de pale d'hélice (14) comprenant les étapes de :
localisation d'un pied de pale d'hélice (18) dans un bras de moyeu (16) le long d'un axe de pale ;
localisation d'une bague flottante (24) en contact avec un ensemble de roulement à billes à montage extérieur (22) à l'intérieur du bras de moyeu (16) ;
localisation d'un ensemble de roulement à rouleaux coniques (26) entre la bague flottante (24) et le pied de pale d'hélice (18), l'ensemble de roulement à rouleaux coniques (26) incluant une pluralité d'éléments de roulement à rouleaux coniques (44), chaque élément de roulement à rouleaux coniques (44) incluant une section corps principal d'élément de roulement (48) ayant un cône de base (54) et
localisation d'un embout (28) en prise face contre face avec la bague flottante (24), l'embout (28) étant en contact avec l'ensemble de roulement à rouleaux coniques (26) pour maintenir une précontrainte du pied de pale d'hélice (18) par rapport au bras de moyeu (16) ;
**caractérisé en ce que** le cône de base (54) se rétrécit vers l'extérieur vers un anneau de pointe (60), le cône de base (54) étant adjacent à un cône en relief (56) ayant une forme tronconique qui se rétrécit vers l'intérieur depuis l'anneau de pointe (60), dans lequel un angle de transition (T) entre le cône de base (54) et le cône en relief (56) au niveau de l'anneau de pointe (60) est d'au moins 170 degrés et est inférieur ou égal à 179 degrés.

11. Procédé selon la revendication 10, dans lequel chaque élément de roulement à rouleaux coniques (44) comprend en outre :
un col (50) lié au cône de base (54) ; et
une tête (52) liée au col (50).

12. Procédé selon la revendication 10 ou 11, dans lequel la localisation de l'embout (28) comprend en outre :
la rotation de la bague flottante (24) et de l'embout (28) jusqu'à ce que l'embout (28) soit en contact avec la bague flottante (24) dans l'état en prise face contre face.

13. Procédé selon l'une quelconque des revendications 10 à 12, dans lequel la localisation de l'embout (28) comprend en outre :
la rotation de la bague flottante (24) et de l'embout (28) jusqu'à ce que l'ensemble de roulement à rouleaux coniques (26) repose complètement entre la bague flottante (24) et le pied de pale d'hélice (18).
